# EUROPEAN PATENT SPECIFICATION

(11) **EP 4 257 258 B1**
(45) Date of publication and mention of the grant of the patent: **01.01.2025**
(21) Application number: 21948405.2
(22) Date of filing: 01.07.2021
(51) Int. Cl.: B21B 38/00, G01N 21/892, G06T 7/00

(54) **ABNORMALITY DETECTION DEVICE AND ABNORMALITY DETECTION METHOD**
ANOMALIEDETEKTIONSVORRICHTUNG UND ANOMALIEDETEKTIONSVERFAHREN
DISPOSITIF DE DÉTECTION D'ANOMALIE ET PROCÉDÉ DE DÉTECTION D'ANOMALIE

(43) Date of publication of application: 11.10.2023
(73) Proprietor: Primetals Technologies Japan, Ltd., Hiroshima-shi, Hiroshima 733-8553 (JP)
(72) Inventor: MOCHIZUKI, Chitoshi, Hiroshima-shi, Hiroshima 733-8553 (JP); OMURA, Akihiro, Hiroshima-shi, Hiroshima 733-8553 (JP); KANEMORI, Shinya, Tokyo 100-8332 (JP); YAMADA, Masahiro, Tokyo 100-8332 (JP)
(74) Representative: Strehl Schübel-Hopf & Partner
(86) International application number: PCT/JP2021/024917
(87) International publication number: WO 2023/276101

(56) References cited:
- JP-A- 2010 078 574
- JP-A- 2010 266 430
- JP-A- H06 167 576
- JP-B1- 6 808 888

## Description

### Technical Field

The present invention relates to an abnormality detecting apparatus and an abnormality detecting method.

### Background Art

As an example of a surface inspection apparatus that accurately obtains a formation signal of a non-defective part in a production line and accurately and efficiently sets a determination threshold, Patent Document 1 makes the description that in a surface inspection apparatus that detects a defect on the surface of a traveling metal steel strip, a threshold computing section includes: a density histogram computing section that obtains a density histogram for each unit area from an image signal; a standard deviation computing section that obtains a peak position of the density histogram, assumes a normal distribution function in a case where the peak position is set as an average value, and obtains a standard deviation value of the assumed normal distribution function from a density histogram degree near the peak position; and a threshold setting section that sets a determination threshold corresponding to the standard deviation value, and the determination threshold is obtained such that the standard deviation value does not contain a defect signal component other than a formation signal component as much as possible.

### Prior Art Document

### Patent Document

Patent Document 1: JP-2010-85096-A
JP 2010-266430 A discloses a conventional inspection apparatus and method with the features in the preamble of the present independent claims.

### Summary of the Invention

### Problem to be Solved by the Invention

With an increase in rolling of a thin strip under high loads in a hot finish rolling mill, the occurrence of a rolled strip pinching phenomenon (referred to as a rolling abnormality) due to the rapid meandering of the strip increases when a strip tail end part passes after the rear tension is released, the number of times of roll exchanges due to the generation of scratches on the roll surface increases, and there is a possibility that the product yield is reduced.

Currently, this problem is avoided by operations such as bending/leveling intervention by visual inspection of an operator, but the avoidance largely depends on the skill of the operator. If the occurrence of rolled strip pinching (rolling abnormality) can be detected by computer image processing using monitoring image information seen by the operator, it is possible to develop into an early intervention operation, and the probability of preventing the occurrence of subsequent rolling abnormalities and equipment failures can be increased.

The rolled strip pinching phenomenon is a phenomenon in which a metal sheet is rolled in a folded and overlapped state when the metal sheet passes through a rolling mill.

When the folded and overlapped part of the strip is rolled in this state, the processing heat generated at the part becomes higher than other parts, and the luminance brighter than the luminance of the strip surface of a normal part is generated, and rolling abnormality detection associated with the luminance difference becomes possible.

Therefore, an image of the surface of the strip is monitored by a camera in order to detect a rolling abnormality such as the rolled strip pinching phenomenon in the hot rolling, and an abnormality of the strip can be detected when the luminance of the strip surface exceeds a certain threshold and the area thereof increases.

This threshold can change according to the type and material of the strip, and for example, Patent Document 1 discloses that the determination threshold can be accurately and efficiently set for the entire surface of the metal steel strip and all the types by measuring a formation signal for each unit area of the surface of the metal steel strip and obtaining a standard deviation value excluding data of a defect part as a formation signal level.

In the technique described in the above Patent Document 1, the determination threshold to be used is fixed. Here, it has become clear from the study by the inventors that the luminance detected by the camera differed depending on effects such as the luminance of illumination and the amount of surrounding water vapor even if the type, material, and the like are the same. Since that point is not considered in the above Patent Document 1, it has become clear that there is room for improvement.

An object of the present invention is to provide an abnormality detecting apparatus and an abnormality detecting method capable of improving the detection accuracy of a rolling abnormality of a strip as compared with conventional ones.

### Means for Solving the Problem

The present invention solves the problem by the apparatus and method as defined in the appended claims.

### Advantages of the Invention

According to the present invention, it is possible to improve the detection accuracy of a rolling abnormality of a strip as compared with conventional ones. Problems, configurations, and effects other than those described above will be clarified by the description of the embodiment below.

### Brief Description of the Drawings

FIG. 1 is a schematic diagram for showing the configuration of rolling facility including an abnormality detecting apparatus of an embodiment of the present invention.
FIG. 2 is a schematic diagram for showing the configuration of the abnormality detecting apparatus of the embodiment of the present invention.
FIG. 3 is a diagram for showing a state of extracting the range of a workpiece to be rolled from an image in the abnormality detecting apparatus of the embodiment.
FIG. 4 is a diagram for showing examples of luminance (RGB) histograms of pixels within the strip range relative to one image in the abnormality detecting apparatus of the embodiment.
FIG. 5 is a diagram for showing an example of a calculation method of a luminance standard value in the abnormality detecting apparatus of the embodiment.
FIG. 6 is a diagram for showing an example of a calculation method of the luminance standard value in the abnormality detecting apparatus of the embodiment.
FIG. 7 is a diagram for showing another example of a calculation method of the luminance standard value in the abnormality detecting apparatus of the embodiment.
FIG. 8 is a diagram for showing an example of an extraction determination process of an abnormal region in the abnormality detecting apparatus of the embodiment.
FIG. 9 is a diagram for showing an example of the extraction determination process of the abnormal region in the abnormality detecting apparatus of the embodiment.
FIG. 10 is a diagram for showing another example of the extraction determination process of the abnormal region in the abnormality detecting apparatus of the embodiment.
FIG. 11 is a diagram for showing still another example of the extraction determination process of the abnormal region in the abnormality detecting apparatus of the embodiment.
FIG. 12 is a diagram for explaining a flow of a calculation method of the abnormal region on the basis of a reflected light region in the abnormality detecting apparatus of the embodiment.
FIG. 13 is a diagram for explaining a flow of a calculation method of the abnormal region on the basis of the reflected light region in the abnormality detecting apparatus of the embodiment.
FIG. 14 is a diagram for explaining a flow of a calculation method of the abnormal region on the basis of the reflected light region in the abnormality detecting apparatus of the embodiment.
FIG. 15 is a flowchart of an abnormality determination process in the abnormality detecting apparatus of the embodiment.

### Mode for Carrying Out the Invention

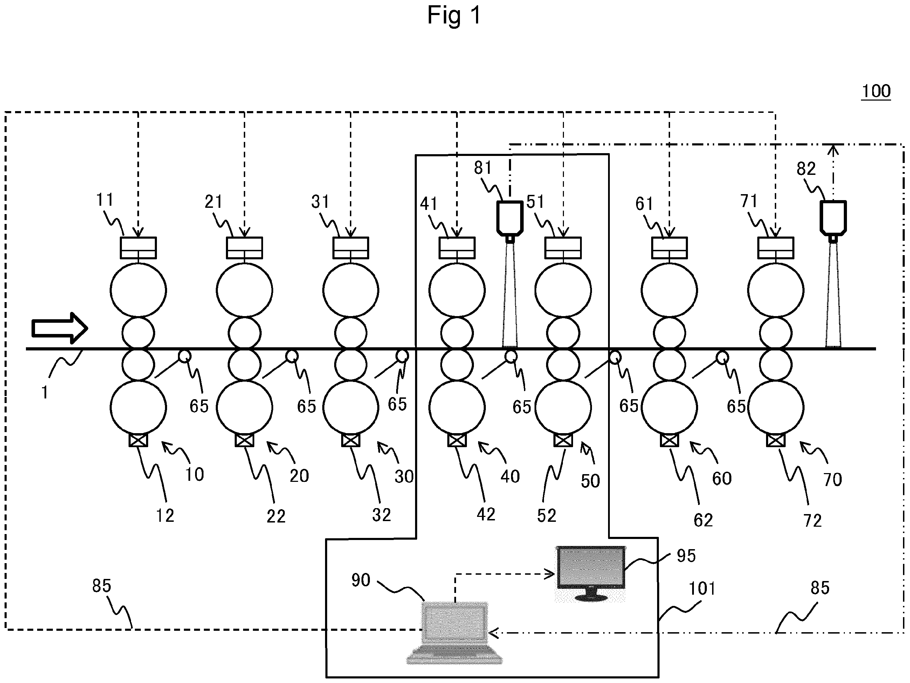

An embodiment of an abnormality detecting apparatus and an abnormality detecting method of the present invention will be described using FIG. 1 to FIG. 15. It should be noted that in the drawings used in the description, the same or corresponding constitutional elements are given the same or similar signs, and repeated descriptions of these constitutional elements are omitted in some cases.

It should be noted that a metal sheet of a material to be rolled in the present invention is generally a strip of a metal material that can be rolled, the type thereof is not particularly limited, and can be non-ferrous materials such as aluminum and copper in addition to a steel strip.

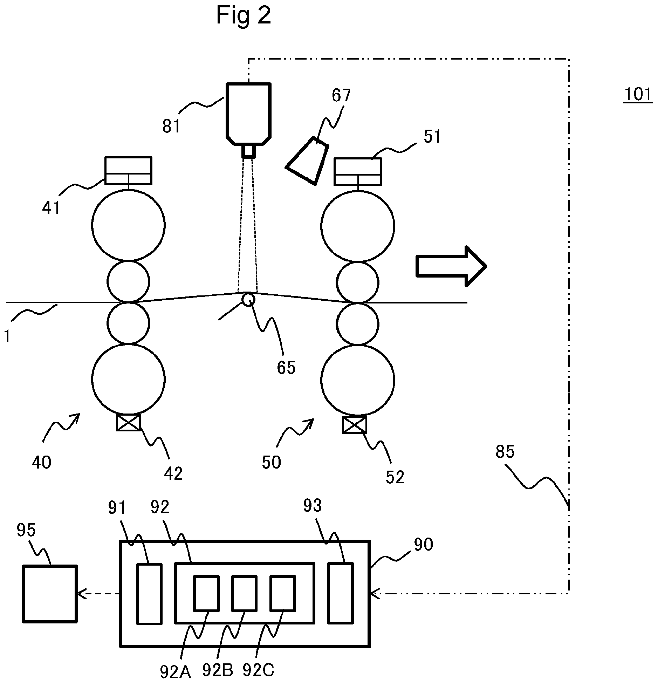

First, the overall configuration of rolling facility including an abnormality detecting apparatus, and the configuration of the abnormality detecting apparatus will be described using FIG. 1 and FIG. 2. FIG. 1 is a schematic diagram for showing the configurations of an abnormality detecting apparatus of the present embodiment and rolling facility including the same, and FIG. 2 is a schematic diagram for showing the configuration of the abnormality detecting apparatus.

Rolling facility 100 shown in FIG. 1 is finishing rolling facility for rolling a workpiece 1 to be rolled, and includes an F1 stand 10, an F2 stand 20, an F3 stand 30, an F4 stand 40, an F5 stand 50, an F6 stand 60, an F7 stand 70, cameras 81 and 82, loopers 65 for tension control, an image processing computer 90, a display apparatus 95, and the like.

Among them, an abnormality detecting apparatus 101 for detecting an abnormality on the surface of the workpiece 1 to be rolled is composed of the cameras 81 and 82, an illumination apparatus 67, and the image processing computer 90.

It should be noted that the rolling facility 100 is not limited to the configuration in which the seven rolling stands are provided as shown in FIG. 1, and it is only necessary to provide at least one or more rolling stands.

Each of the F1 stand 10, the F2 stand 20, the F3 stand 30, the F4 stand 40, the F5 stand 50, the F6 stand 60, and the F7 stand 70 is a rolling mill including an upper work roll and a lower work roll, an upper backup roll and a lower backup roll supporting these upper work roll and lower work roll by contact therewith, respectively, a reduction cylinder 11, 21, 31, 41, 51, 61, or 71 provided at an upper part of the upper backup roll, and a load detector 12, 22, 32, 42, 52, 62, or 72. It should be noted that it is possible to have a six-high mill configuration in which an upper intermediate roll is further provided between each upper work roll and each upper backup roll and a lower intermediate roll is further provided between each lower work roll and each lower backup roll. The roll configuration of the rolling mill is not limited to the above configuration, and it is only necessary to have at least the upper and lower work rolls.

The loopers 65 are rolls for line tension control. Each roll is installed such that the rotation axis thereof extends in the width direction of the workpiece 1 to be rolled, and is provided between the F1 stand 10 and the F2 stand 20, between the F2 stand 20 and the F3 stand 30, between the F3 stand 30 and the F4 stand 40, between the F4 stand 40 and the F5 stand 50, between the F5 stand 50 and the F6 stand 60, and between the F6 stand 60 and the F7 stand 70 such that the line tension can be changed by raising the workpiece 1 to be rolled upward in the vertical direction or by lowering the same downward. It should be noted that the loopers 65 may further have the function of a strip shape meter for detecting the tension distribution in the strip width direction.

The camera 81 is provided at a position where an image including the workpiece 1 to be rolled on the exit side of the F4 stand 40 and on the entry side of the F5 stand 50 can be captured, and can capture an image including the workpiece 1 to be rolled from, for example, directly above or diagonally above the workpiece 1 to be rolled at an interval shorter than, for example, 0.1 seconds, preferably in a moving image format. Data of the image captured by the camera 81 is transmitted to the image processing computer 90 via a communication line 85.

The camera 82 is provided on the exit side of the F7 stand 70 at a position where an image including the workpiece 1 to be rolled can be captured, and captures an image including the workpiece 1 to be rolled from directly above or diagonally above the workpiece 1 to be rolled at an interval shorter than, for example, 0.1 seconds, as similar to the camera 81. The data of the image captured by the camera 82 is also transmitted to the image processing computer 90 via the communication line 85.

These cameras 81 and 82 execute an image capturing step of capturing images including the workpiece 1 to be rolled.

In the present embodiment, it is assumed that these cameras 81 and 82 capture images of the workpiece 1 to be rolled at different times during the rolling of one roll configuring the workpiece 1 to be rolled that is an object to be detected for an abnormality.

It should be noted that a case where the cameras are provided at two positions such as a position between the exit side of the F4 stand 40 and the entry side of the F5 stand 50, and a position on the exit side of the F7 stand 70 will be described, but the camera only needs to be provided at, at least, one position, the number of cameras can be one or more, and the cameras may be provided between all the stands, or on the entry side and the exit side of the rolling facility 100.

The illumination apparatus 67 illuminates the workpiece 1 to be rolled, especially the workpiece 1 to be rolled within the ranges captured by the cameras 81 and 82, and can be general illumination equipment appropriately arranged on the ceiling or the like of a rolling plant where the rolling facility 100 is installed, but may be a dedicated illumination apparatus.

The image processing computer 90 is an apparatus composed of a computer or the like that controls the operation of each device in the rolling facility 100, and has a luminance standard value setting section 91, an image processing section 92, and a database 93.

The luminance standard value setting section 91 is a part that extracts the workpiece 1 to be rolled from at least one image captured by the camera 81, 82 and obtains the standard value of luminance by which the strip is determined to have no abnormality from luminance data possessed by pixels within the range of the workpiece 1 to be rolled, and is the main body for executing a luminance standard value setting step. When moving images are captured by the cameras 81 and 82, the luminance standard value setting section 91 extracts an image from the moving images.

The image processing section 92 is a part that sets one or more captured images as comparative images, extracts the workpiece 1 to be rolled from each comparative image, and detects a rolling abnormality on the surface on the basis of the luminance difference between the luminance data possessed by pixels within the range of the workpiece 1 to be rolled and the above luminance standard value, and is the main body for executing an image processing step. The image processing section 92 has a detection region setting section 92A, a reflected light region setting section 92B, an abnormal region setting section 92C, and the like.

The detection region setting section 92A is a part that sets a detection region of the workpiece 1 to be rolled, which is an object to be detected for an abnormality, from the comparative image.

The reflected light region setting section 92B is a part that sets a reflected light region where illumination light originating from the illumination apparatus 67 is reflected on the surface of the workpiece 1 to be rolled from the comparative image.

The abnormal region setting section 92C is a part that detects an abnormal part on the surface from the detection region by using the standard value as a threshold and sets a region obtained by removing the reflected light region as an abnormal region.

The details of the processes by these luminance standard value setting section 91, image processing section 92, detection region setting section 92A, reflected light region setting section 92B, and abnormal region setting section 92C will be described later.

It should be noted that the comparative image processed by the image processing section 92 is assumed to be basically the latest image.

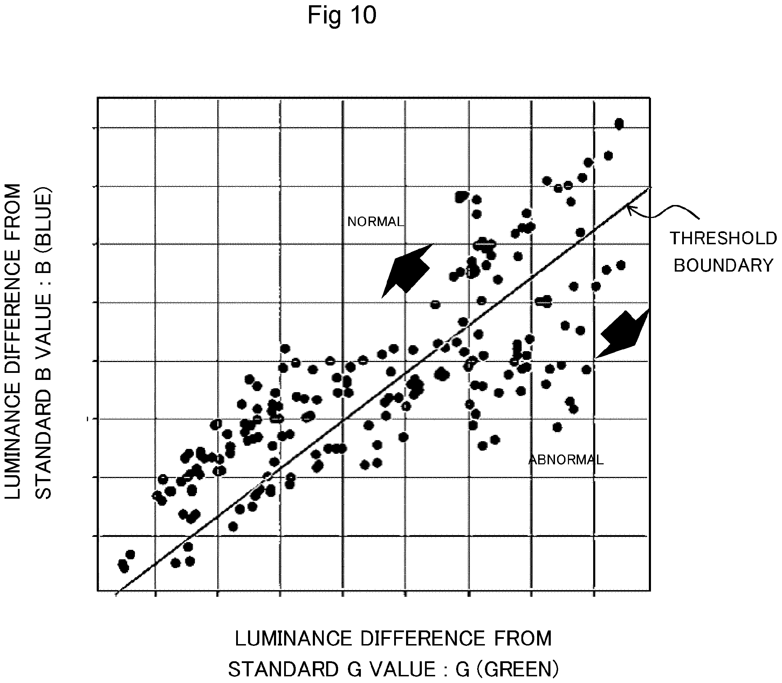

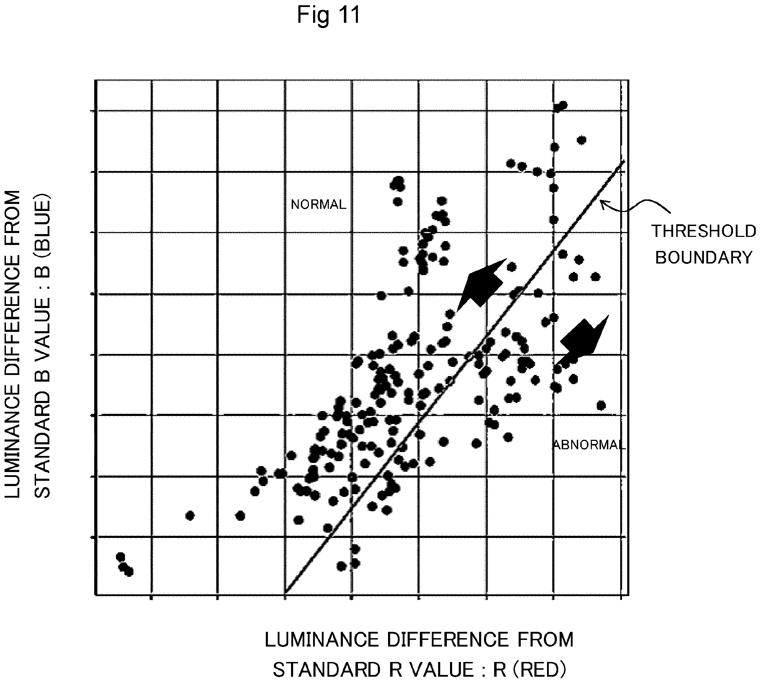

The database 93 is a storage apparatus that stores information preliminarily obtaining a threshold boundary that separates a normal value from an abnormal value, for example, information of a boundary line shown in FIG. 10 or FIG. 11 from distribution obtained by plotting, a plurality of times, the luminance difference of one component against the luminance difference of another component on a two-dimensional graph composed of two components, among the luminance of an R (red) value, a G (green) value, and a B (blue) value of pixels within the range of the workpiece 1 to be rolled in the image where the workpiece 1 to be rolled is reflected. Preferably, the database is composed of an SSD, an HDD, or the like.

The display apparatus 95 is a display device such as a display or an acoustic device such as an alarm, and is an apparatus for informing, for example, an operator of the occurrence of a strip shape abnormality and the handling work when the image processing computer 90 determines that the strip shape is abnormal. Therefore, a display is often used as the display apparatus 95.

During the operation, the operator visually checks the display screen of the display apparatus 95, each stand itself, and a region between the respective stands to confirm the presence or absence of a rolling abnormality such as a rolled strip pinching phenomenon. For example, in a case where the operator confirms an indication on the display apparatus 95 that the rolled strip pinching phenomenon has occurred and an operation to be performed, such as bending correction, leveling correction, roll speed correction, or roll gap opening of a downstream stand, is indicated, it is possible to avoid a transition from an abnormal rolling state to a further-deteriorated state by manually operating according to the instruction.

It should be noted that it is possible to adopt a configuration in which the occurrence of an abnormality such as the occurrence of the rolled strip pinching phenomenon is indicated on the display screen of the display apparatus 95 for the operator, and a correction or stop signal to avoid the rolling abnormality is transmitted to a rolling mill controller to automatically control a rolling abnormality avoidance operation, or a configuration in which various correction operations or stop operations are performed under automatic control without the indication on the display apparatus 95.

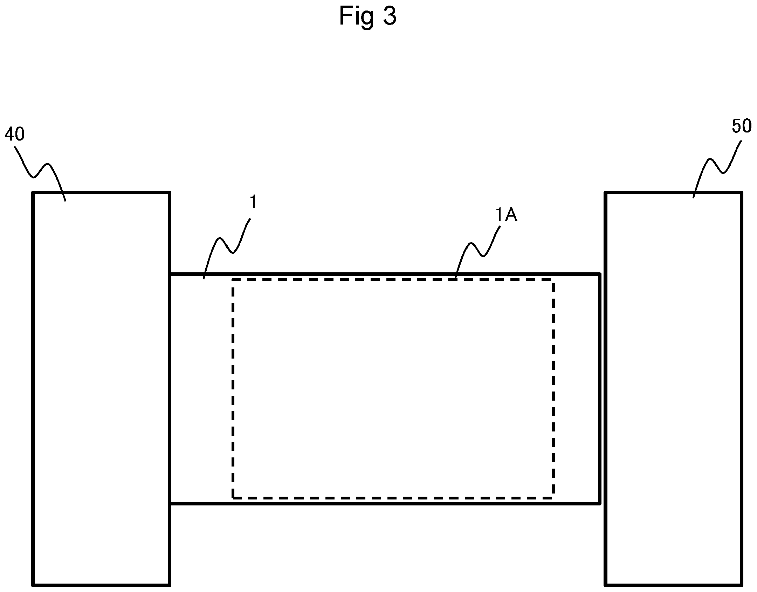

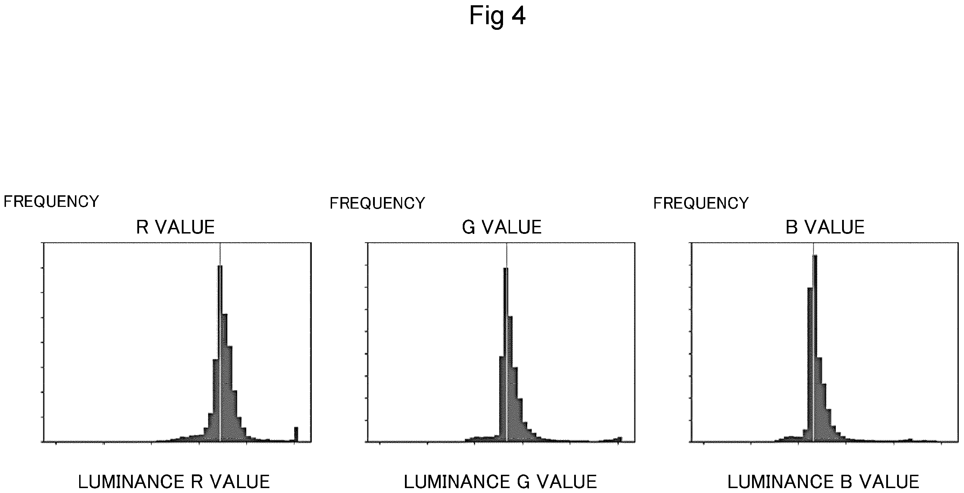

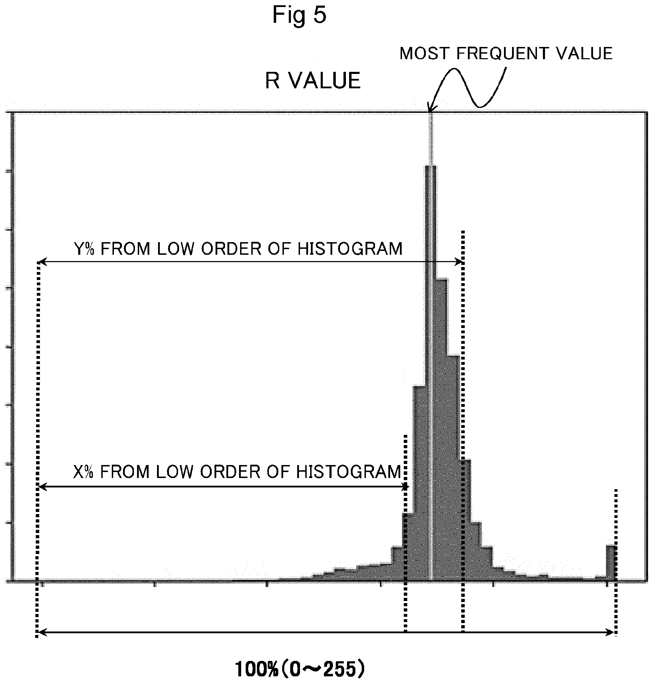

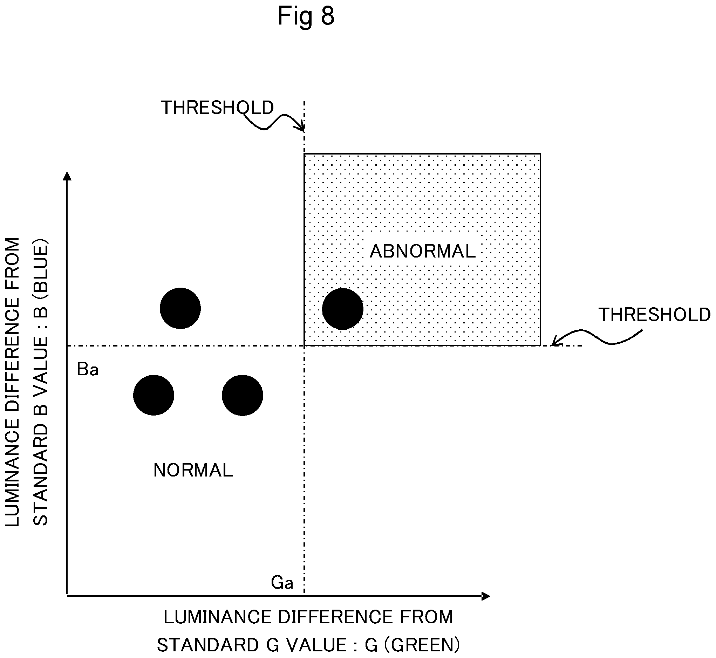

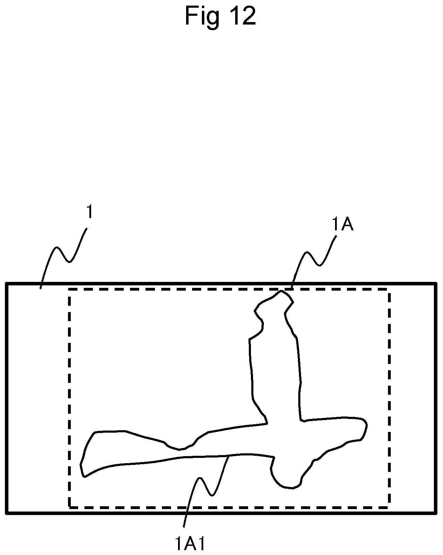

Next, a concrete example of an abnormality detecting process for determining the abnormality of the strip shape of the workpiece 1 to be rolled in the present invention will be described using FIG. 3 and the drawings that follow. FIG. 3 is a diagram for showing a state in which the range of the workpiece to be rolled is extracted from an image, FIG. 4 is a diagram for showing examples of luminance (RGB) histograms of pixels within the strip range relative to one image, FIG. 5 to FIG. 7 are diagrams each showing an example of a calculation method of the luminance standard value by which the strip has no abnormality, FIG. 8 to FIG. 11 are diagrams each showing an example of an extraction and determination process of the abnormal region, and FIG. 12 to FIG. 14 are diagrams each explaining a flow of the calculation method of the abnormal region by the illumination region.

As described above, even if the workpiece 1 to be rolled is of the same type and material, the luminance detected by the camera differs depending on the luminance of illumination during the rolling, the amount of surrounding water vapor, and the influence of image processing settings or the like of the camera, and thus it is necessary to take measures.

As a result of intensive study for this by the inventors, the inventors found an idea of changing the threshold of the determination for each rolling coil even if the workpiece 1 to be rolled is of the same type and material, and the present invention has been completed.

The details of the process will be described below.

First, images including the workpiece 1 to be rolled are acquired by the cameras 81 and 82. Preferably, a state of the workpiece 1 to be rolled is continuously captured in a moving image format. The captured images are output to the image processing computer 90 via the communication line 85.

In the image processing computer 90, the luminance standard value setting section 91 discriminates, as shown in FIG. 3, the background from the region where the workpiece 1 to be rolled exists by binarization processing from the image of the workpiece 1 to be rolled at the time of rolling, and extracts a range 1A of the workpiece 1 to be rolled from a luminance region equal to or higher than a certain threshold. Thereafter, the range 1A extracted in the image processing section 92 including the detection region setting section 92A, the reflected light region setting section 92B, the abnormal region setting section 92C, and the like is subjected to the abnormality detecting process.

It should be noted that the range 1A to be extracted may include a region slightly inside or slightly outside the real strip region, and does not necessarily need to match the workpiece 1 to be rolled, but since the position of the captured workpiece 1 to be rolled changes due to the up-and-down fluctuation of the loopers 65 in some cases, the range 1A needs to be extracted so as to follow the change.

Next, in the image processing computer 90, the luminance standard value setting section 91 obtains the luminance distribution of pixels inside the range 1A of the workpiece 1 to be rolled for one selected image, and calculates the luminance standard value by which the strip is determined to have no abnormality. Here, it is assumed that the luminance standard value setting section 91 divides the luminance data into three components of the R value, the G value, and the B value, and obtains three values of a standard R value (R₀ value), a standard G value (G₀ value), and a standard B value (B₀ value) as the luminance standard values.

It should be noted that among the above luminance standard values, two values (any combination of the R₀ value and the G₀ value, the R₀ value and the B₀ value, the B₀ value and the G₀ value) may be obtained.

In addition, the luminance standard value setting section 91 can have a configuration in which the luminance data is processed by a gray scale such as 8 bits (256 gradations) or 16 bits (65536 gradations). Even in the case of the gray scale, the subsequent processes are basically the same and the details thereof are omitted.

As the process of obtaining the three values of the standard R value (R₀ value), the standard G value (G₀ value), and the standard B value (B₀ value) as the luminance standard values, there are a method of selecting the values from one image and a method of selecting the values from a plurality of images. First, the method of selecting the luminance standard values from one image will be described.

In this case, for one image captured by the camera 81, 82, the luminance standard value setting section 91 obtains the frequency distribution (histogram) of the luminance of each of the R value, the G value, and the B value indicated by measurement points with respect to the luminance (RGB) in all the pixels in the range 1A extracted in FIG. 3. Here, R is red, G is green, and B is blue, and all the R, G, and B take values of 0 to 255. FIG. 4 shows examples of the luminance (RGB) histograms of the strip range for one image.

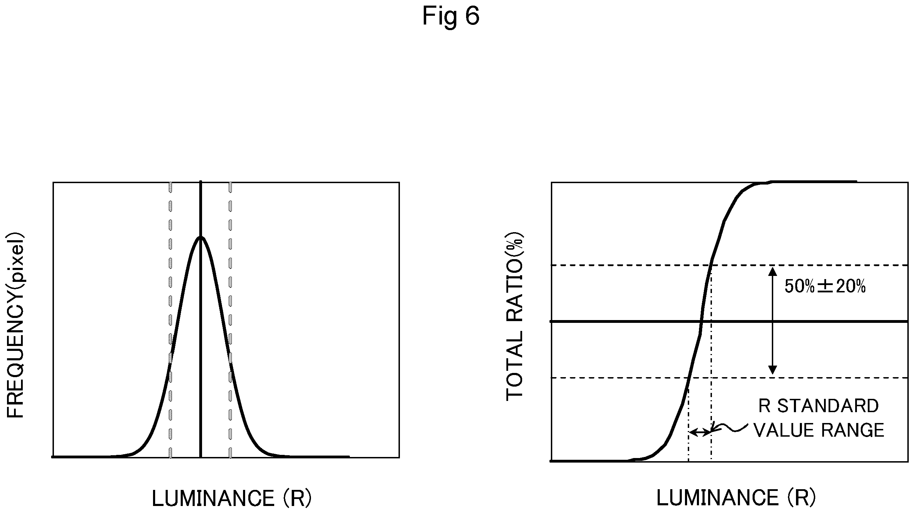

Next, as shown in FIG. 5 and FIG. 6, the luminance standard value setting section 91 sets the value (center position: 50%) that divides the area indicated by the integral values of respective distribution into two as the initial luminance standard value of each RGB component by which the strip is determined to have no abnormality. In addition, one value is selected in an allowable range within ±20% from the center position 50%, and can be set as the luminance standard value of each RGB component. It should be noted that the allowable range need not be "±20%" and can be appropriately changed.

The value (position) used to obtain the luminance standard values may be a format in which the operator specifies before rolling the workpiece 1 to be rolled that is an object to be detected for an abnormality, may be a format in which a value preset in the apparatus is used, or may be a format in which the optimum value is appropriately learned by machine learning.

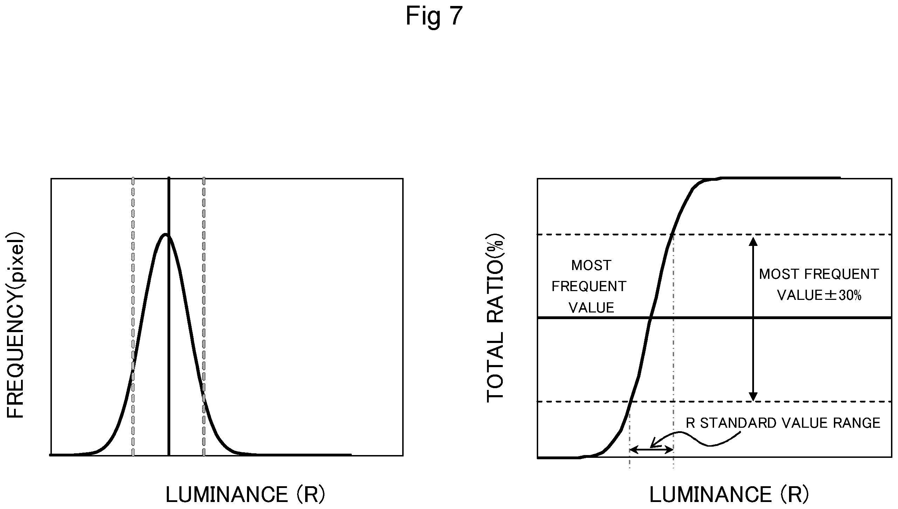

In addition, instead of using the value that divides the area into two, as shown in FIG. 7, the luminance (most frequent value), which is the largest number of measurement points in respective distribution, can be set as the initial luminance standard value of each RGB by which the strip is determined to have no abnormality. Further, one value is selected in an allowable range within ±30% from the most frequent value, and can be set as the luminance standard value of each RGB component. It should be noted that the allowable range need not be "±30%" and can be appropriately changed.

In such a method of selecting the luminance standard values from one image, a configuration in which the value obtained from the first image is used as it is during the rolling of the corresponding one coil, or a configuration in which the luminance standard values are obtained again from one newly-captured image and the luminance standard values are updated at any time may be adopted, and the method is not particularly limited.

Next, the method of selecting the luminance standard values from a plurality of images will be described. In this method, the luminance standard value setting section 91 obtains the luminance standard values by averaging the luminance data captured in a plurality of images, but each time the latest image is captured, it is desirable to add the luminance data captured in the new image to the previously-obtained luminance data and to obtain the luminance standard values again.

First, for two or more images captured by the cameras 81 and 82, the luminance standard value setting section 91 obtains, for example, the luminance standard values (Rᵢ, Gᵢ, and Bᵢ) of each image captured by the camera 81 by using the methods shown in FIG. 4 to FIG. 7. For example, luminance standard values R₁, G₁, and B₁ are obtained in the first image, R₂, G₂, and B₂ are obtained in the second image, and R₃, G₃, and B₃ are obtained in the third image. It should be noted that the luminance standard values are obtained for each image of a specific position captured by each camera.

As the subsequent processes, there are, for example, (i) a method of obtaining from an arithmetic average using a plurality of images at the same time and (ii) a method of obtaining from moving average processing for each plural images. First, the case of obtaining from an arithmetic average using a plurality of images at the same time in (i) will be described.

The luminance standard value setting section 91 obtains, according to the number of images used in setting the luminance standard values, luminance R standard value R₀ = R₁ in the case of one image, luminance R standard value R₀ = (R₁ + R₂)/2 in the case of two images, and luminance R standard value R₀ = (R₁ + R₂ + R₃)/3 in the case of three images and the arithmetic average of the number of images to be used. The same method is applied to the luminance G and the luminance B.

Next, the case of obtaining from moving average processing for each plural images in (ii) will be described. The luminance standard value setting section 91 takes, according to the number of images used in setting the luminance standard values, luminance R standard value R = (R₁ + R₂)/2 = R₁₂ in the case of two images and luminance R standard value R₀ = (R₁₂ + R₃)/2 in the case of three images after one image is newly added at the next timing and a moving average. The same method is applied to the luminance G and the luminance B.

It should be noted that even in the method of selecting the luminance standard values from a plurality of images, the updating of the luminance standard values may be stopped in the middle when it is determined to be stable, or they may be constantly updated during the rolling of one coil, and the method is not particularly limited.

Thereafter, the image processing section 92 divides the luminance data from the image into the R value, the G value, and the B value, and subtracts the standard R value from the R value, the standard G value from the G value, and the standard B value from the B value to obtain each luminance difference. Here, it is simply assumed that the luminance difference of the luminance data R is R - R₀, the luminance difference of the luminance data G is G - G₀, and the luminance difference of the luminance data B is B - B₀.

In addition, in a case where a plurality of images is used in setting the standard values, the last (latest) image among the plurality of images may also be used as the comparative image.

Thereafter, the image processing section 92 detects a rolling abnormality on the basis of the relationship between the luminance differences of two components among the respective luminance differences. As the abnormality determination methods, there are two methods of (i) a determination based on the relationship between the luminance differences of two components (using a threshold of a specific value), wherein the method (i) is an example useful for understanding the invention, and (ii) a determination based on the relationship between the luminance differences of two components (using an optional threshold boundary). First, the details of the determination based on the relationship between the luminance differences of two components (using a threshold of a specific value) in (i) will be described.

In this case, the image processing section 92 detects as an abnormality in a case where both the luminance differences of two components among the R value, the G value, and the B value are equal to or larger than the respective thresholds.

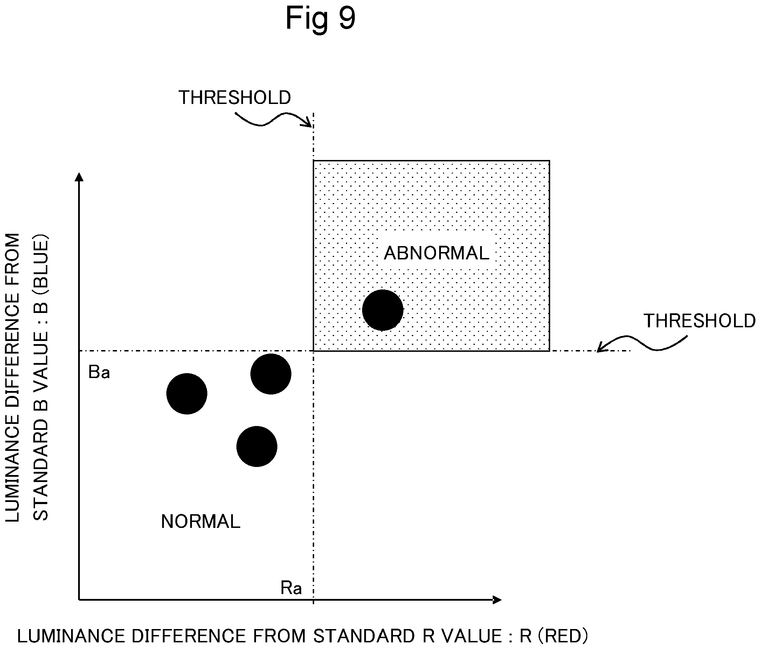

For example, the image processing section 92 obtains whether or not both the luminance difference between the B value and the standard B value and the luminance difference between the G value and the standard G value are equal to or larger than the thresholds of the respective luminance differences among the R value, the G value, and the B value as shown in FIG. 8, and whether or not both the luminance difference between the B value and the standard B value and the luminance difference between the R value and the standard R value are equal to or larger than the thresholds of the respective luminance differences as shown in FIG. 9, and detects as a rolling abnormality in a case where both the luminance differences of two components in one combination are equal to or larger than the thresholds (Gₐ and Bₐ in FIG. 8) of the respective luminance differences and both the luminance differences of two components in another combination are equal to or larger than the thresholds (Rₐ and Bₐ) of the respective luminance differences.

It should be noted that although not shown in the drawing, the relationship between the luminance difference G - G₀ and the luminance difference R - R₀ can be used to determine whether both the luminance differences of two components are equal to or larger than the respective thresholds (Gₐ and Rₐ).

The determination processes as shown in FIG. 8 and FIG. 9 are particularly effective in the environment with less water vapor because water vapor generated during the rolling becomes noise in image processing. It should be noted that it is desirable to execute this process together with a process of removing the reflected light region where the illumination light originating from the illumination apparatus 67 to be described later is reflected on the surface of the workpiece to be rolled.

Next, the details of the determination based on the relationship between the luminance differences of two components (using a threshold boundary) in (ii) will be described. Unlike the above (i), this process is not affected by the presence or absence of water vapor and can be preferably executed in the case of rolling conditions with much water vapor. In addition, this process can be preferably executed irrespective of the presence or absence of the removal of the reflected light region where the illumination light originating from the illumination apparatus 67 to be described later is reflected on the surface of the workpiece to be rolled.

In this case, the image processing section 92 detects an abnormality on the strip surface on the basis of the luminance difference of one component, the luminance difference of another component, and the threshold boundary.

For example, the image processing section 92 obtains a detection result of whether or not to be abnormal from the luminance differences (the luminance difference between the B value and the standard B value and the luminance difference between the G value and the standard G value) of two components as one combination among the R value, the G value, and the B value and the boundary obtained therefrom as shown in FIG. 10, and also obtains a detection result of whether or not to be abnormal from the luminance differences (the luminance difference between the B value and the standard B value and the luminance difference between the R value and the standard R value) of two components as another combination and the boundary obtained therefrom as shown in FIG. 11. More specifically, it is determined whether or not the plots of the luminance differences (R - R₀, G - G₀, and B - B₀) from the standard values exist on the abnormal side from the boundary line.

Thereafter, in a case where both the detection results are obtained as abnormal, the image processing section 92 detects as an abnormality on the strip surface.

It should be noted that although not shown in the drawing, the relationship between the luminance difference G - G₀ and the luminance difference R - R₀ can be used, but it is desirable that the image processing section 92 uses the luminance difference of the G value and the luminance difference of the B value and the luminance difference of either one among the three combinations.

In addition, although the case of using two of the three combinations has been described, a determination may be made using any one of the three combinations. In addition, in a case where one of the two combinations is equal to or larger than a threshold boundary, it may be detected as an abnormality. Further, a determination may be made using all of the three combinations. In a case where all of the three combinations are used, it may be detected as an abnormality in a case where any one of the combinations is equal to or larger than a threshold boundary, it may be detected as an abnormality in a case where two of the combinations that are decided by majority are equal to or larger than a threshold boundary, or it may be detected as an abnormality only in a case where all of the three combinations are equal to or larger than a threshold boundary. In these cases, the luminance differences of the G value and the B value can be prioritized as described above.

For the threshold boundary lines shown in FIG. 10 and FIG. 11, it is desirable to collect a plurality of pieces of image data of normality and abnormality occurrence in advance, to obtain an approximate formula that can separate, and to store it in the database 93.

The threshold boundary line for separation can be drawn, for example, by an operator of the rolling facility 100 or an employee of the manufacturer of the abnormality detecting apparatus on the basis of a result diagram. In addition, a normality and an abnormality can be classified by using a mathematical method, for example, by using a data clustering method (data classification method). One method is to obtain a linear equation using a two classification method by an SVM method (support vector machine) such that the distance (margin) between a normality and an abnormality is maximized.

Next, the details of the removal of the reflected light region originating from the illumination apparatus 67 will be described using FIG. 12 to FIG. 14.

As shown in FIG. 12, the abnormal region takes the shape of luminance distribution in the rolling direction (conveyance direction). On the other hand, the image actually captured by the camera 81, 82 is an image in which a drawn part and reflected light region 1A1 where this abnormal region and the region (the strip-width (longitudinal) direction in FIG. 12) of the reflected light originating from the illumination apparatus 67 are mixed is reflected, and it is desirable to remove the reflected light region originating from the illumination apparatus 67 from the drawn part and reflected light region 1A1.

Here, since the RGB color of the reflected light region originating from the illumination apparatus 67 is close to white and, for example, the RGB color of the drawn part is close to yellow in some cases, it is desirable to perform binarization processing using a threshold of luminance, convert into an image with two colors of white and black, and then extract and remove the region that continues relatively long in the strip-width direction and is determined to be white as the reflected light region originating from the illumination apparatus 67.

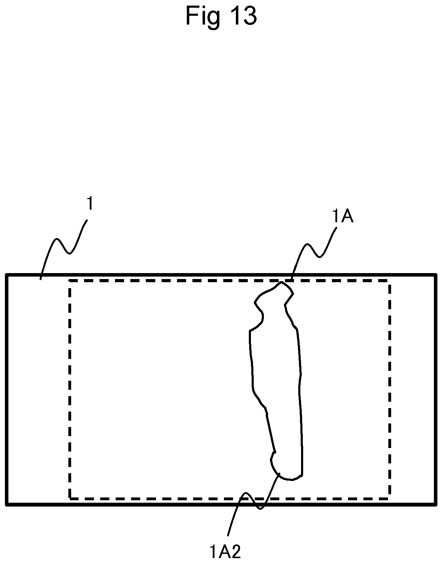

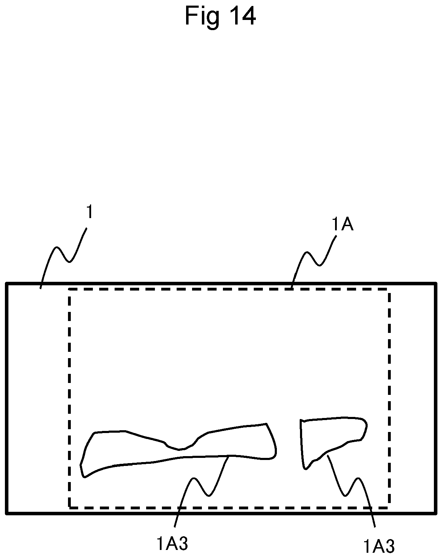

Therefore, in the image processing section 92, for the latest image in the comparison images, the detection region setting section 92A sets the region determined as abnormal using the methods of FIG. 8 to FIG. 11 described above as the drawn part and reflected light region 1A1. Then, as shown in FIG. 13, a reflected light region 1A2 that originates from the illumination apparatus 67 and is relatively long in the strip-width direction is extracted and deleted from the drawn part and reflected light region 1A1 by the reflected light region setting section 92B, and only a true abnormal region 1A3 (region relatively long in the conveyance direction) is extracted as shown in FIG. 14. Thereafter, the abnormal region setting section 92C sets the detected true abnormal region 1A3 as an abnormal region, and the process shifts to a final detecting process of the presence or absence of the detection of a rolling abnormality.

It should be noted that although the case of excluding the reflected light region 1A2 originating from the illumination apparatus 67 from the drawn part and reflected light region 1A1 detected as an abnormality on the surface according to the procedures of FIG. 8 to FIG. 11 has been described, a procedure in which the reflected light region 1A2 originating from the illumination apparatus 67 is excluded first after the detection of the range 1A of the strip, and then the rolling abnormal region is set by the processes of FIG. 8 and the like may be adopted.

Then, in a case where the total area value of the respective pixels in the abnormal region set by preferably removing the reflected light region originating from the illumination apparatus 67 or the abnormal region detected as an abnormal part on the surface by the methods of FIG. 8 and the like, or the value obtained by dividing the total area value by the area of the range 1A of the whole workpiece 1 to be rolled is larger than a certain threshold (ε), the image processing section 92 determines that a rolling abnormality has occurred in the workpiece 1 to be rolled.

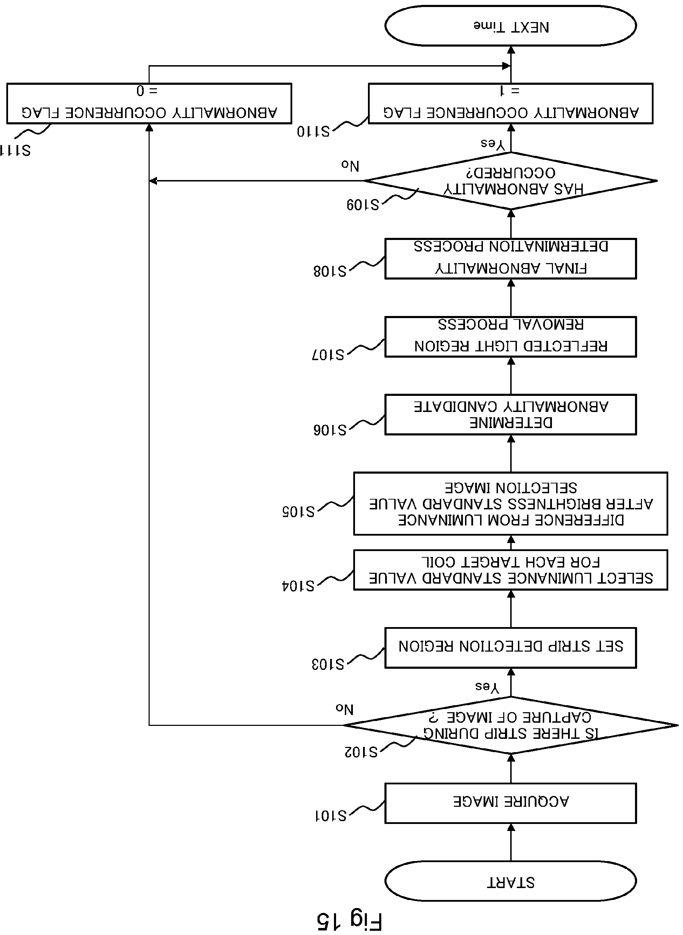

Next, an abnormality detecting method of detecting an abnormality on the surface of the workpiece 1 to be rolled by the rolling mill according to the present embodiment will be described with reference to FIG. 15. FIG. 15 is a flowchart of the abnormality determination process in the abnormality detecting apparatus of the embodiment.

First, as shown in FIG. 15, images are acquired by the cameras 81 and 82 (Step S101). This Step S101 corresponds to the image capturing step, and it is assumed that moving images are preferably captured.

Next, in the luminance standard value setting section 91 of the image processing computer 90, it is determined whether or not the workpiece 1 to be rolled exists in the images captured in Step S101 (Step S102). When it is determined that the workpiece 1 to be rolled exists, the process proceeds to Step S103, while when it is determined that it does not exist, the process proceeds to Step Sill.

Thereafter, after a strip detection region is set in the luminance standard value setting section 91 (Step S103), the luminance standard value for each target coil is selected (Step S104). Step S103 and Step S104 correspond to the luminance standard value setting step.

Next, the difference from the luminance of the comparative image captured after the luminance standard value selection image in the image processing section 92 of the image processing computer 90 is obtained (Step S105), and an abnormality candidate is determined (Step S106). At this time, the removal process of the reflected light region originating from the illumination apparatus 67 is preferably executed in the image processing section 92 (Step S107). Thereafter, the final abnormality determination process is executed in the image processing section 92 (Step S108), and it is determined whether or not a rolling abnormality such as drawing has occurred (Step S109). When it is determined that an abnormality has occurred, the process proceeds to Step S110, while when it is determined that no abnormality has occurred, the process proceeds to Step Sill. Step S105 to Step S109 correspond to the image processing step.

When it is determined in Step S110 that an abnormality has occurred, the image processing section 92 records an abnormality occurrence flag as 1 (Step S110), and when it is determined in Step S102 that the workpiece 1 to be rolled does not exist, or when it is determined in Step S110 that no abnormality has occurred, the image processing section 92 records the abnormality occurrence flag as 0 (Step Sill), and the process starts again at the next timing.

When the abnormality occurrence flag is recorded as 1, the image processing computer 90 displays the fact on the display apparatus 95. Alternatively, an intervention process can be automatically executed for each of the stands 10, 20, 30, 40, 50, 60, and 70.

The processes of Step S101 to Step Sill described above are executed during the rolling of one rolling coil, and the processes are terminated when the rolling of one rolling coil is completed.

Next, the effects of the present embodiment will be described.

The abnormality detecting apparatus of the present embodiment described above is an apparatus that detects a rolling abnormality on the surface of a workpiece 1 to be rolled by a rolling mill, and includes: cameras 81 and 82 that capture images of the workpiece 1 to be rolled that is an object to be detected for the rolling abnormality during rolling of the workpiece 1 to be rolled; a luminance standard value setting section 91 that extracts the workpiece 1 to be rolled from at least one image captured by the camera 81, 82 and obtains a luminance standard value by which the workpiece 1 to be rolled is determined to have no abnormality from luminance data of pixels within the range of the workpiece 1 to be rolled; and an image processing section 92 that extracts the workpiece 1 to be rolled from each of one or more comparative images set among one or more of the captured images and detects the rolling abnormality on the surface on the basis of the luminance difference between the luminance data within the range of the workpiece 1 to be rolled and the luminance standard value.

In this way, in the workpiece 1 to be rolled that is an object to be detected for a rolling abnormality, since the luminance standard value serving as the standard to compare the abnormality is obtained each time and the standard value is used only for the comparative images of the workpiece 1 to be rolled of the same coil, a rolling abnormality on the surface of the workpiece 1 to be rolled can be detected in consideration of a disturbance peculiar to the workpiece 1 to be rolled, and the rolling abnormality detection accuracy of the strip can be improved as compared with the conventional one.

In addition, the luminance standard value setting section 91 divides the luminance data into three components of an R value, a G value, and a B value, and obtains, as the standard values, the values of two or more components among three components of a standard R value, a standard G value, and a standard B value, and the image processing section 92 divides the luminance data of the pixels within the range of the workpiece 1 to be rolled into an R value, a G value, and a B value, subtracts the standard R value from the R value, the standard G value from the G value, and the standard B value from the B value to obtain each of luminance differences, and detects the rolling abnormality on the basis of the relationship between the luminance differences of two components among the respective luminance differences, and it possible to compositely determine the abnormality and to further improve the abnormality detection accuracy.

Further, the cameras 81 and 82 capture moving images, and the luminance standard value setting section 91 extracts an image from the moving images and can obtain the luminance standard value calculated on the basis of the luminance data within the range of the workpiece 1 to be rolled captured in a plurality of successive images by obtaining the luminance standard value by performing simple average processing or weighted moving average processing on the luminance data captured in the plurality of images, and even if there is an instantaneous image fluctuation in one image, the abnormality caused by the fluctuation is reduced by referring to the state of another image, and it is possible to obtain a value close to the normal luminance standard value by which the strip is determined to have no abnormality. Therefore, it is possible to contribute to improvement in the detection accuracy.

In addition, each time the latest image is captured, the luminance standard value setting section 91 adds the luminance data captured in the new image to the already-obtained luminance data to obtain the luminance standard value again, so that even if there is an image fluctuation, the luminance standard value is obtained using the luminance data of the previous images, and thus the abnormality caused by the fluctuation is reduced, and it is possible to obtain a value close to the normal luminance standard value by which the strip is determined to have no abnormality.

Further, the luminance standard value setting section 91 divides the luminance data into three components of an R value, a G value, and a B value, obtains the distribution of the luminance of each of the R value, the G value, and the B value indicated by measurement points with respect to luminance, sets the luminance of each RGB component dividing the area indicated by the integral value of respective distribution into two or the luminance that is the largest number of measurement points among the respective distribution as an initial luminance standard value, further sets a specific luminance range including the initial luminance standard value, and selects the R value, the G value, and the B value from the set luminance range to be the luminance standard value of each value, so that if it is the luminance data separating the area indicated by the integral value of the distribution of the luminance data of an R component, a G component, and a B component by about half or around the luminance recording the largest number of plots, the luminance data of the normal surface region occupying most of the detection range is sufficiently reflected, and thus the luminance (standard value) of the normal surface region of the strip can be accurately obtained by eliminating the influence of the luminance data of the reflected light region reflected on the strip surface of a narrow portion by the illumination apparatus 67.

In addition, an illumination apparatus 67 that illuminates the workpiece 1 to be rolled is further provided, and the image processing section 92 sets, from the latest image, a detection region of the workpiece 1 to be rolled that is an object to be detected for an abnormality, sets, from the latest image, a reflected light region that originates from illumination light of the illumination apparatus 67 and is reflected on the surface of the workpiece 1 to be rolled, sets anew a region obtained by removing the reflected light region from the detection region as a detection region, sets as an abnormal region on the basis of the relationship of the luminance difference between the luminance data of the pixels in the detection region obtained anew and the luminance standard value, and detects the rolling abnormality, so that the true surface abnormality with the reflected light region of the illumination light of the illumination apparatus 67 removed can be extracted, and further improvement in the abnormality detection accuracy can be achieved.

Further, in an example useful for understanding the invention, the luminance difference is obtained by subtracting the luminance standard value from the luminance data, and the image processing section 92 detects as the rolling abnormality in a case where both the luminance differences of two components among the R value, the G value, and the B value are equal to or larger than respective luminance difference thresholds, so that the abnormality is detected in a case where both the luminance differences of the two components are equal to or larger than respective thresholds, thereby reducing erroneous detection and achieving further improvement in the abnormality detection accuracy.

In addition, in a further example useful for understanding the invention, the image processing section 92 detects as the rolling abnormality in a case where both the luminance differences of two components as one combination among the R value, the G value, and the B value are equal to or larger than the respective thresholds and both the luminance differences of two components as another combination are equal to or larger than the respective luminance difference thresholds, so that since two sets of combinations of two components are used and the surface is determined to be abnormal in a case where an abnormality is detected in both of them, it becomes difficult to erroneously detect a normal part as an abnormal part, and further improvement in the abnormality detection accuracy can be achieved.

Further, a database in which a threshold boundary separating a normal value from an abnormal value is obtained in advance from the distribution obtained by plotting, a plurality of times, the luminance difference of one component against the luminance difference of another component on a two-dimensional graph of two components among the R value, the G value, and the B value in the image in which the workpiece 1 to be rolled is reflected is further provided, and the image processing section 92 detects the rolling abnormality on the basis of the luminance difference of the one component, the luminance difference of another component, and the threshold boundary. When the data of the luminance differences is plotted for each of the R value and the G value, the G value and the B value, and the R value and the B value, a data group in which the strip is normal and a data group in which the strip is abnormal tend to be separated by a certain line. Therefore, by using the line as the threshold boundary for the luminance differences of the respective components, further improvement in the abnormality detection accuracy can be achieved.

In addition, the image processing section 92 detects as the rolling abnormality in a case where the detection result obtained from the luminance differences of two components as one combination among the R value, the G value, and the B value and the threshold boundary obtained therefrom is abnormal and the detection result obtained from the luminance differences of two components as another combination and the threshold boundary obtained therefrom is abnormal, so that since two sets of combinations of two components are used and the surface is determined to be abnormal in a case where an abnormality is detected in both of them, it becomes difficult to erroneously detect a normal part as an abnormal part, and further improvement in the abnormality detection accuracy can be achieved.

Further, the image processing section 92 uses the luminance differences of the G value and the B value. Because of the reddish color tone of the workpiece 1 to be rolled, when the R value is used, the luminance of the normal part does not differ much from that of the abnormal part, and it is not suitable for determination in some cases. Therefore, by using the G value and the B value, it is possible to detect an abnormality irrespective of the ground color of the workpiece 1 to be rolled.

### <Others>

It should be noted that the present invention is not limited to the above embodiment, and can be modified and applied in various ways. The embodiment described above has been described in detail to clearly describe the present invention, and is not necessarily limited to those having all the configurations described.

### Description of Reference Characters

1: Workpiece to be rolled (metal sheet)
1A: Extracted range of workpiece to be rolled
1A1: Drawn part and reflected light region
1A2: Reflected light region
1A3: Abnormal region
10: F1 Stand
11, 21, 31, 41, 51, 61, 71: Reduction cylinder
12, 22, 32, 42, 52, 62, 72: Load detector
20: F2 stand
30: F3 stand
40: F4 stand
50: F5 stand
60: F6 stand
61: Reduction cylinder
65: Looper for tension control
67: Illumination apparatus
70: F7 stand
71: Reduction cylinder
81, 82: Camera
85: Communication line
90: Image processing computer
91: Luminance standard value setting section
92: Image processing section
92A: Detection region setting section
92B: Reflected light region setting section
92C: Abnormal region setting section
93: Database
95: Display apparatus
100: Rolling facility
101: Abnormality detecting apparatus

## Claims

1. An abnormality detecting apparatus that detects a rolling abnormality on a surface of a metal sheet (1) to be rolled by a rolling mill, the abnormality detecting apparatus comprising:
a camera (81, 82) configured to capture images of the metal sheet (1) that is an object to be detected for the rolling abnormality during rolling of the metal sheet (1);
a luminance standard value setting section (91) configured to extract the metal sheet (1) from at least one image captured by the camera and obtain a luminance standard value by which the strip is determined to have no abnormality from luminance data of pixels within a range of the metal sheet (1) extracted from the at least one image; and
an image processing section (92) configured to extract the metal sheet (1) from a latest image among the captured images and detect the rolling abnormality on a basis of a luminance difference between the luminance data of the pixels within the range of the metal sheet (1) extracted from the latest image and the luminance standard value;
wherein the luminance standard value setting section (91) is configured to divide the luminance data extracted from the at least one image into three components of an R value, a G value, and a B value, and obtain, as the luminance standard values, a standard R value, a standard G value, and a standard B value,
wherein the image processing section (92) is configured to divide the luminance data of the pixels within the range of the metal sheet (1) extracted from the latest image into an R value, a G value, and a B value, subtract the standard R value from the R value, the standard G value from the G value, and the standard B value from the B value to obtain luminance differences extracted from the latest image, and detect the rolling abnormality on a basis of the relationship between the luminance differences of two components among the respective luminance differences extracted from the latest image,
**characterized in that** the abnormality detecting apparatus further comprises a database (93) in which a threshold boundary separating a normal value from an abnormal value is obtained in advance from distribution obtained by plotting, a plurality of times, a luminance difference between a component value and a standard value of one component against the luminance difference between a component value and a standard value of another component on a two-dimensional graph of two components among the R value, the G value, and the B value in images in which a metal sheet is reflected from a plurality of pieces of image data of normality and abnormality collected in advance, wherein the image processing section (92) is configured to detect the rolling abnormality on a basis of the luminance difference of the one component extracted from the latest image, the luminance difference of the other component extracted from the latest image, and the threshold boundary.

2. The abnormality detecting apparatus according to claim 1, wherein
the camera (81, 82) captures moving images, and
the luminance standard value setting section (91) is configured to extract the images from the moving images and obtain the luminance standard value by performing simple average processing or weighted moving average processing on the luminance data captured in the images.

3. The abnormality detecting apparatus according to claim 2, wherein the luminance standard value setting section (91) is configured to, each time a latest image is captured, add the luminance data captured in a new image to the already-obtained luminance data to obtain the luminance standard value again.

4. The abnormality detecting apparatus according any one of claims 1 to 3, wherein the luminance standard value setting section (91) is configured to
divide the luminance data into three components of an R value, a G value, and a B value,
obtain distribution of luminance of each of the R value, the G value, and the B value indicated by measurement points with respect to the luminance,
set the luminance of each RGB component dividing area indicated by integral value of the respective distribution into two or the luminance that is a largest number of measurement points among the respective distribution as an initial luminance standard value, set a specific luminance range including the initial luminance standard value, and select the R value, the G value, and the B value from the set luminance range to be the luminance standard value of each value.

5. The abnormality detecting apparatus according any one of claims 1 to 4, further comprising:
an illumination apparatus (67) configured to illuminate the metal sheet (1),
wherein the image processing section (92) is configured to set, from the latest image, a detection region of the metal sheet (1) that is an object to be detected for an abnormality, set, from the latest image, a reflected light region that originates from illumination light of the illumination apparatus and is reflected on the surface of the metal sheet (1), set anew a region obtained by removing the reflected light region from the detection region as a detection region, set as an abnormal region on a basis of the relationship of the luminance difference between the luminance data of the pixels in the detection region obtained anew and the luminance standard value, and detect the rolling abnormality.

6. The abnormality detecting apparatus according to claim 1, wherein the image processing section (92) is configured to detect as the rolling abnormality in a case where a detection result obtained from the luminance differences of two components as one combination among the R value, the G value, and the B value and the threshold boundary obtained therefrom is abnormal and a detection result obtained from the luminance differences of two components as another combination and the threshold boundary obtained therefrom is abnormal.

7. An abnormality detecting method that detects a rolling abnormality on a surface of a metal sheet (1) to be rolled by a rolling mill, the abnormality detecting method comprising:
an image capturing step of capturing, by a camera (81, 82), images of the metal sheet (1) that is an object to be detected for the rolling abnormality during rolling of the metal sheet (1);
a luminance standard value setting step of extracting the metal sheet (1) from at least one image captured in the image capturing step and obtaining a luminance standard value by which the strip is determined to have no abnormality from luminance data of pixels within a range of the metal sheet (1) extracted from the at least one image; and
an image processing step of extracting the metal sheet (1) from a latest image among the captured images and detecting the rolling abnormality on a basis of the luminance difference between the luminance data of the pixels within the range of the metal sheet (1) extracted from the latest image and the luminance standard value;
wherein, in the luminance standard value setting step, the luminance data extracted from the at least one image is divided into three components of an R value, a G value, and a B value, and a standard R value, a standard G value, and a standard B value are obtained as the luminance standard values,
wherein, in the image processing process, the luminance data of the pixels within the range of the metal sheet (1) extracted from the latest image is divided into an R value, a G value, and a B value, the standard R value is subtracted from the R value, the standard G value is subtracted from the G value, and the standard B value is subtracted from the B value to obtain luminance differences extracted from the latest image, and the rolling abnormality is detected on a basis of the relationship between the luminance differences of two components among the respective luminance differences extracted from the latest image,
**characterized in that** in the image processing process, the rolling abnormality is detected on a basis of a luminance difference of one component extracted from the latest image, a luminance difference of another component extracted from the latest image, and a threshold boundary, wherein the threshold boundary separating a normal value from an abnormal value is stored in a database (93) and is obtained in advance from distribution obtained by plotting, a plurality of times, the luminance difference between a component value and a standard value of the one component against the luminance difference between a component value and a standard value of the other component on a two-dimensional graph of two components among the R value, the G value, and the B value in images in which a metal sheet is reflected from a plurality of pieces of image data of normality and abnormality collected in advance.

8. The abnormality detecting method according to claim 7, wherein
in the image capturing process, moving images are captured, and
in the luminance standard value setting process, the images are extracted from the moving images, and the luminance standard value is obtained by performing simple average processing or weighted moving average processing on the luminance data captured in the images.

9. The abnormality detecting method according to claim 8, wherein in the luminance standard value setting process, each time the latest image is captured, the luminance data captured in a new image is added to the already-obtained luminance data to obtain the luminance standard value again.

## Patentansprüche

1. Abnormitätserkennungsvorrichtung, die eine Walzabnormität an der Oberfläche eines durch ein Walzwerk zu walzenden Metallblechs (1) erkennt, wobei die Abnormitätserkennungsvorrichtung Folgendes aufweist:
eine Kamera (81, 82), die ausgelegt ist, Bilder des Metallblechs (1), wobei es sich um ein während des Walzens des Metallblechs (1) auf eine Walzabnormität zu untersuchendes Objekt handelt, aufzunehmen,
einen Leuchtdichtestandardwert-Festlegungsabschnitt (91), der ausgelegt ist, das Metallblech (1) aus mindestens einem von der Kamera aufgenommenen Bild zu extrahieren und einen Leuchtdichtestandardwert, anhand dessen festgestellt wird, dass das Band keine Abnormität aufweist, anhand Leuchtdichtedaten von Pixeln innerhalb eines aus dem mindestens einen Bild extrahierten Bereichs des Metallblechs (1) zu erhalten, und
einen Bildverarbeitungsabschnitt (92), der ausgelegt ist, das Metallblech (1) aus dem neuesten der aufgenommenen Bilder zu extrahieren und die Walzabnormität auf der Grundlage der Leuchtdichtedifferenz zwischen den Leuchtdichtedaten der Pixel innerhalb des aus dem neuesten Bild extrahierten Bereichs des Metallblechs (1) und des Leuchtdichtestandardwerts zu erkennen,
wobei der Leuchtdichtestandardwert-Festlegungsabschnitt (91) ausgelegt ist, die aus dem mindestens einen Bild extrahierten Leuchtdichtedaten in drei Komponenten eines R-Werts, eines G-Werts und eines B-Werts zu unterteilen und als Leuchtdichtestandardwerte einen Standard-R-Wert, einen Standard-G-Wert und einen Standard-B-Wert zu erhalten,
wobei der Bildverarbeitungsabschnitt (92) ausgelegt ist, die Leuchtdichtedaten der Pixel innerhalb des aus dem neuesten Bild extrahierten Bereichs des Metallblechs (1) in einen R-Wert, einen G-Wert und einen B-Wert zu unterteilen, den Standard-R-Wert vom R-Wert, den Standard-G-Wert vom G-Wert und den Standard-B-Wert vom B-Wert zu subtrahieren, um aus dem neuesten Bild extrahierte Leuchtdichtedifferenzen zu erhalten, und die Walzabnormität auf der Grundlage der Beziehung zwischen den Leuchtdichtedifferenzen zweier Komponenten unter den jeweiligen aus dem neuesten Bild extrahierten Leuchtdichtedifferenzen zu erkennen,
**dadurch gekennzeichnet, dass** die Abnormitätserkennungsvorrichtung ferner eine Datenbank (93) aufweist, in der eine Schwellenbegrenzung, die einen normalen Wert von einem abnormen Wert trennt, vorab aus einer Verteilung erhalten wurde, die durch mehrmaliges Auftragen der Leuchtdichtedifferenz zwischen einem Komponentenwert und einem Standardwert einer Komponente gegen die Leuchtdichtedifferenz zwischen einem Komponentenwert und einem Standardwert der anderen von zwei Komponenten aus dem R-Wert, dem G-Wert und dem B-Wert in Bildern, in denen sich ein Metallblech widerspiegelt, aus mehreren vorab gesammelten Bilddatenbestandteilen über eine Normalität und eine Abnormität, in einem zweidimensionalen Graphen erhalten wurde, wobei der Bildverarbeitungsabschnitt (92) ausgelegt ist, die Walzabnormität auf der Grundlage der aus dem neuesten Bild extrahierten Leuchtdichtedifferenz der einen Komponente, der aus dem neuesten Bild extrahierten Leuchtdichtedifferenz der anderen Komponente und der Schwellenbegrenzung zu erkennen.

2. Abnormitätserkennungsvorrichtung nach Anspruch 1, wobei
die Kamera (81, 82) Bewegtbilder aufnimmt und
der Leuchtdichtestandardwert-Festlegungsabschnitt (91) ausgelegt ist, die Bilder aus den Bewegtbildern zu extrahieren und den Leuchtdichtestandardwert durch Ausführen einer einfachen Mittelungsverarbeitung oder einer Verarbeitung zum Erhalten eines gewichteten gleitenden Mittelwerts an den in den Bildern erfassten Leuchtdichtedaten zu erhalten.

3. Abnormitätserkennungsvorrichtung nach Anspruch 2, wobei der Leuchtdichtestandardwert-Festlegungsabschnitt (91) ausgelegt ist, jedes Mal dann, wenn das neueste Bild aufgenommen wird, die in einem neuen Bild erfassten Leuchtdichtedaten zu den bereits erhaltenen Leuchtdichtedaten zu addieren, um den Leuchtdichtestandardwert erneut zu erhalten.

4. Abnormitätserkennungsvorrichtung nach einem der Ansprüche 1 bis 3, wobei der Leuchtdichtestandardwert-Festlegungsabschnitt (91) ausgelegt ist, Folgendes auszuführen:
Unterteilen der Leuchtdichtedaten in drei Komponenten eines R-Werts, eines G-Werts und eines B-Werts,
Erhalten der Leuchtdichteverteilung jeweils des R-Werts, des G-Werts und des B-Werts, die durch Messpunkte in Bezug auf die Leuchtdichte angegeben ist,
Festlegen der Leuchtdichte jeder RGB-Komponente, welche die durch den Integralwert der jeweiligen Verteilung angegebene Fläche in zwei Teile unterteilt, oder der Leuchtdichte, welche die größte Zahl der Messpunkte in der jeweiligen Verteilung ist, als anfänglicher Leuchtdichtestandardwert, Festlegen eines den anfänglichen Leuchtdichtestandardwert aufweisenden spezifischen Leuchtdichtebereichs und Auswählen des R-Werts, des G-Werts und des B-Werts aus dem festgelegten Leuchtdichtebereich als Leuchtdichtestandardwert jedes Werts.

5. Abnormitätserkennungsvorrichtung nach einem der Ansprüche 1 bis 4, ferner aufweisend:
eine Beleuchtungsvorrichtung (67), die ausgelegt ist, das Metallblech (1) zu beleuchten,
wobei der Bildverarbeitungsabschnitt (92) ausgelegt ist, anhand des neuesten Bilds einen Erfassungsbereich des Metallblechs (1) als auf eine Abnormität zu untersuchendes Objekt festzulegen, anhand des neuesten Bilds einen Reflektiertes-Licht-Bereich festzulegen, der vom Beleuchtungslicht der Beleuchtungsvorrichtung ausgeht und sich an der Oberfläche des Metallblechs (1) widerspiegelt, einen durch Beseitigen des Reflektiertes-Licht-Bereichs aus dem Erfassungsbereich erhaltenen Bereich neu als Erfassungsbereich festzulegen, einen abnormen Bereich auf der Grundlage der Beziehung der Leuchtdichtedifferenz zwischen den Leuchtdichtedaten der Pixel im neu erhaltenen Erfassungsbereich und dem Leuchtdichtestandardwert festzulegen und die Walzabnormität zu erkennen.

6. Abnormitätserkennungsvorrichtung nach Anspruch 1, wobei der Bildverarbeitungsabschnitt (92) ausgelegt ist, eine Walzabnormität zu erkennen, falls ein anhand der Leuchtdichtedifferenzen zweier Komponenten als Kombination unter dem R-Wert, dem G-Wert und dem B-Wert und der daraus erhaltenen Schwellenbegrenzung erhaltenes Erkennungsergebnis abnorm ist und ein anhand der Leuchtdichtedifferenzen zweier Komponenten als andere Kombination und der daraus erhaltenen Schwellenbegrenzung erhaltenes Erkennungsergebnis abnorm ist.

7. Abnormitätserkennungsverfahren, das eine Walzabnormität an der Oberfläche eines durch ein Walzwerk zu walzenden Metallblechs (1) erkennt, wobei das Abnormitätserkennungsverfahren Folgendes aufweist:
einen Bildaufnahmeschritt zum Aufnehmen von Bildern des Metallblechs (1), wobei es sich um ein während des Walzens des Metallblechs (1) auf eine Walzabnormität zu untersuchendes Objekt handelt, durch eine Kamera (81, 82),
einen Leuchtdichtestandardwert-Festlegungsschritt zum Extrahieren des Metallblechs (1) aus mindestens einem im Bildaufnahmeschritt aufgenommenen Bild und zum Erhalten eines Leuchtdichtestandardwerts, anhand dessen festgestellt wird, dass das Band keine Abnormität aufweist, anhand Leuchtdichtedaten von Pixeln innerhalb eines aus dem mindestens einen Bild extrahierten Bereichs des Metallblechs (1), und
einen Bildverarbeitungsschritt zum Extrahieren des Metallblechs (1) aus dem neuesten der aufgenommenen Bilder und zum Erkennen der Walzabnormität auf der Grundlage der Leuchtdichtedifferenz zwischen den Leuchtdichtedaten der Pixel innerhalb des aus dem neuesten Bild extrahierten Bereichs des Metallblechs (1) und des Leuchtdichtestandardwerts,
wobei im Leuchtdichtestandardwert-Festlegungsschritt die aus dem mindestens einen Bild extrahierten Leuchtdichtedaten in drei Komponenten eines R-Werts, eines G-Werts und eines B-Werts unterteilt werden und ein Standard-R-Wert, ein Standard-G-Wert und ein Standard-B-Wert als Leuchtdichtestandardwerte erhalten werden,
wobei im Bildverarbeitungsprozess die Leuchtdichtedaten der Pixel innerhalb des aus dem neuesten Bild extrahierten Bereichs des Metallblechs (1) in einen R-Wert, einen G-Wert und einen B-Wert unterteilt werden, der Standard-R-Wert vom R-Wert subtrahiert wird, der Standard-G-Wert vom G-Wert subtrahiert wird und der Standard-B-Wert vom B-Wert subtrahiert wird, um aus dem neuesten Bild extrahierte Leuchtdichtedifferenzen zu erhalten, und die Walzabnormität auf der Grundlage der Beziehung zwischen den Leuchtdichtedifferenzen zweier Komponenten unter den jeweiligen aus dem neuesten Bild extrahierten Leuchtdichtedifferenzen erkannt wird,
**dadurch gekennzeichnet, dass** beim Bildverarbeitungsprozess die Walzabnormität auf der Grundlage einer Leuchtdichtedifferenz einer aus dem neuesten Bild extrahierten Komponente, einer Leuchtdichtedifferenz einer anderen aus dem neuesten Bild extrahierten Komponente und einer Schwellenbegrenzung erkannt wird, wobei die Schwellenbegrenzung, die einen normalen Wert von einem abnormen Wert trennt, in einer Datenbank (93) gespeichert wird und vorab aus einer Verteilung erhalten wird, die durch mehrmaliges Auftragen der Leuchtdichtedifferenz zwischen einem Komponentenwert und einem Standardwert der einen Komponente gegen die Leuchtdichtedifferenz zwischen einem Komponentenwert und einem Standardwert der anderen Komponente in einem zweidimensionalen Graphen zweier Komponenten unter dem R-Wert, dem G-Wert und dem B-Wert in Bildern, in denen sich ein Metallblech widerspiegelt, aus mehreren vorab gesammelten Bilddatenbestandteilen über eine Normalität und eine Abnormität erhalten wird.

8. Abnormitätserkennungsverfahren nach Anspruch 7, wobei
im Bildaufnahmeprozess Bewegtbilder aufgenommen werden und
im Leuchtdichtestandardwert-Festlegungsprozess die Bilder aus den Bewegtbildern extrahiert werden und der Leuchtdichtestandardwert durch Ausführen einer einfachen Mittelungsverarbeitung oder einer Verarbeitung zum Erhalten eines gewichteten gleitenden Mittelwerts an den in den Bildern erfassten Leuchtdichtedaten erhalten wird.

9. Abnormitätserkennungsverfahren nach Anspruch 8, wobei beim Leuchtdichtestandardwert-Festlegungsprozess jedes Mal dann, wenn das neueste Bild aufgenommen wird, die in einem neuen Bild erfassten Leuchtdichtedaten zu den bereits erhaltenen Leuchtdichtedaten addiert werden, um den Leuchtdichtestandardwert erneut zu erhalten.

## Revendications

1. Appareil de détection d'anomalie qui détecte une anomalie de laminage sur une surface d'une tôle métallique (1) devant être laminée par un laminoir, l'appareil de détection d'anomalie comprenant :
une caméra (81, 82) configurée pour capturer des images de la tôle métallique (1) qui est un objet devant être détecté pour l'anomalie de laminage lors du laminage de la tôle métallique (1) ;
une section (91) de définition de valeur standard de luminance configurée pour extraire la tôle métallique (1) d'au moins une image capturée par la caméra et obtenir une valeur standard de luminance par laquelle la bande est déterminée n'avoir aucune anomalie à partir de données de luminance de pixels dans une plage de la tôle métallique (1) extraite de l'au moins une image ; et
une section (92) de traitement d'images configurée pour extraire la tôle métallique (1) d'une image la plus récente parmi les images capturées et détecter l'anomalie de laminage sur une base d'une différence de luminance entre les données de luminance des pixels dans la plage de la tôle métallique (1) extraite de l'image la plus récente et la valeur standard de luminance ;
dans lequel la section (91) de définition de valeur standard de luminance est configurée pour diviser les données de luminance extraites de l'au moins une image en trois composantes d'une valeur R, d'une valeur V, et d'une valeur B, et obtenir, comme les valeurs standard de luminance, une valeur R standard, une valeur V standard, et une valeur B standard,
dans lequel la section (92) de traitement d'images est configurée pour diviser les données de luminance des pixels dans la plage de la tôle métallique (1) extraite de l'image la plus récente en une valeur R, une valeur V, et une valeur B, soustraire la valeur R standard de la valeur R, la valeur V standard de la valeur V, et la valeur B standard de la valeur B pour obtenir des différences de luminance extraites de l'image la plus récente, et détecter l'anomalie de laminage sur une base de la relation entre les différences de luminance de deux composantes parmi les différences de luminance respectives extraites de l'image la plus récente,
**caractérisé en ce que** l'appareil de détection d'anomalie comprend en outre une base de données (93) dans laquelle une limite seuil séparant une valeur normale d'une valeur anormale est obtenue au préalable à partir d'une distribution obtenue par une représentation graphique, une pluralité de fois, d'une différence de luminance entre une valeur de composante et une valeur standard d'une composante par rapport à la différence de luminance entre une valeur de composante et une valeur standard d'une autre composante sur un graphique bidimensionnel de deux composantes parmi la valeur R, la valeur V, et la valeur B dans des images dans lesquelles une tôle métallique est réfléchie à partir d'une pluralité d'éléments de données d'images de normalité et d'anormalité recueillies au préalable, dans lequel la section (92) de traitement d'images est configurée pour détecter l'anomalie de laminage sur une base de la différence de luminance de la composante extraite de l'image la plus récente, de la différence de luminance de l'autre composante extraite de l'image la plus récente, et de la limite seuil.

2. Appareil de détection d'anomalie selon la revendication 1, dans lequel
la caméra (81, 82) capture des images animées, et
la section (91) de définition de valeur standard de luminance est configurée pour extraire les images des images animées et obtenir la valeur standard de luminance en exécutant un traitement de calcul de moyenne simple ou un traitement de calcul de moyenne pondérée sur les données de luminance capturées dans les images.

3. Appareil de détection d'anomalie selon la revendication 2, dans lequel la section (91) de définition de valeur standard de luminance est configurée pour, à chaque fois qu'une image la plus récente est capturée, ajouter les données de luminance capturées dans une nouvelle image aux données de luminance déjà obtenues pour obtenir à nouveau la valeur standard de luminance.

4. Appareil de détection d'anomalie selon l'une quelconque des revendications 1 à 3, dans lequel la section (91) de définition de valeur standard de luminance est configurée pour
diviser les données de luminance en trois composantes d'une valeur R, d'une valeur V, et d'une valeur B,
obtenir une distribution de luminance de chacune de la valeur R, de la valeur V, et de la valeur B indiquées par des points de mesure pour ce qui concerne la luminance,
définir la luminance de chaque composante RVB en divisant une zone indiquée par une valeur entière de la distribution respective en deux ou la luminance qui est un nombre le plus grand de points de mesure parmi la distribution respective comme une valeur standard de luminance initiale, définir une plage de luminance spécifique incluant la valeur standard de luminance initiale, et sélectionner la valeur R, la valeur V, et la valeur B à partir de la plage de luminance définie pour être la valeur standard de luminance de chaque valeur.

5. Appareil de détection d'anomalie selon l'une quelconque des revendications 1 à 4, comprenant en outre :
un appareil (67) d'éclairage configuré pour éclairer la tôle métallique (1),
dans lequel la section (92) de traitement d'images est configurée pour définir, à partir de l'image la plus récente, une région de détection de la tôle métallique (1) qui est un objet devant être détecté pour une anomalie, définir, à partir de l'image la plus récente, une région de lumière réfléchie qui provient de la lumière d'éclairage de l'appareil d'éclairage et est réfléchie sur la surface de la tôle métallique (1), définir à nouveau une région obtenue en supprimant la région de lumière réfléchie de la région de détection comme une région de détection, définir comme une région anormale sur une base de la relation de la différence de luminance entre les données de luminance des pixels dans la région de détection obtenue à nouveau et la valeur standard de luminance, et détecter l'anomalie de laminage.

6. Appareil de détection d'anomalie selon la revendication 1, dans lequel la section (92) de traitement d'images est configurée pour détecter comme l'anomalie de laminage dans un cas où un résultat de détection obtenu à partir des différences de luminance de deux composantes comme une combinaison parmi la valeur R, la valeur V, et la valeur B et la limite seuil obtenue à partir de celles-ci est anormal et un résultat de détection obtenu à partir des différences de luminance de deux composantes comme une autre combinaison et la limite seuil obtenue à partir de celles-ci est anormal.

7. Procédé de détection d'anomalie qui détecte une anomalie de laminage sur une surface d'une tôle métallique (1) devant être laminée par un laminoir, le procédé de détection d'anomalie comprenant :
une étape de capture d'images pour capturer, par une caméra (81, 82), des images de la tôle métallique (1) qui est un objet devant être détecté pour l'anomalie de laminage lors du laminage de la tôle métallique (1) ;
une étape de définition de valeur standard de luminance pour extraire la tôle métallique (1) d'au moins une image capturée à l'étape de capture d'images et obtenir une valeur standard de luminance par laquelle la bande est déterminée n'avoir aucune anomalie à partir de données de luminance de pixels dans une plage de la tôle métallique (1) extraite de l'au moins une image ; et
une étape de traitement d'images pour extraire la tôle métallique (1) d'une image la plus récente parmi les images capturées et détecter l'anomalie de laminage sur une base de la différence de luminance entre les données de luminance des pixels dans la plage de la tôle métallique (1) extraite de l'image la plus récente et la valeur standard de luminance ;
dans lequel, à l'étape de définition de valeur standard de luminance, les données de luminance extraites de l'au moins une image sont divisées en trois composantes d'une valeur R, d'une valeur V, et d'une valeur B, et une valeur R standard, une valeur V standard, et une valeur B standard sont obtenues comme les valeurs standard de luminance,
dans lequel, à l'étape de traitement d'images, les données de luminance des pixels dans la plage de la tôle métallique (1) extraite de l'image la plus récente sont divisées en une valeur R, une valeur V, et une valeur B, la valeur R standard est soustraite de la valeur R, la valeur V standard est soustraite de la valeur V, et la valeur B standard est soustraite de la valeur B pour obtenir des différences de luminance extraites de l'image la plus récente, et l'anomalie de laminage est détectée sur une base de la relation entre les différences de luminance de deux composantes parmi les différences de luminance respectives extraites de l'image la plus récente,
**caractérisé en ce que**, à l'étape de traitement d'images, l'anomalie de laminage est détectée sur une base d'une différence de luminance d'une composante extraite de l'image la plus récente, d'une différence de luminance d'une autre composante extraite de l'image la plus récente, et d'une limite seuil, dans lequel la limite seuil séparant une valeur normale d'une valeur anormale est stockée dans une base de données (93) et est obtenue au préalable à partir d'une distribution obtenue par une représentation graphique, une pluralité de fois, de la différence de luminance entre une valeur de composante et une valeur standard de la composante par rapport à la différence de luminance entre une valeur de composante et une valeur standard de l'autre composante sur un graphique bidimensionnel de deux composantes parmi la valeur R, la valeur V, et la valeur B dans des images dans lesquelles une tôle métallique est réfléchie à partir d'une pluralité d'éléments de données d'images de normalité et d'anormalité recueillies au préalable.

8. Procédé de détection d'anomalie selon la revendication 7, dans lequel
dans le processus de capture d'images, des images animées sont capturées, et
dans le processus de définition de valeur standard de luminance, les images sont extraites des images animées, et la valeur standard de luminance est obtenue en exécutant un traitement de calcul de moyenne simple ou un traitement de calcul de moyenne pondérée sur les données de luminance capturées dans les images.

9. Procédé de détection d'anomalie selon la revendication 8, dans lequel, dans le processus de définition de valeur standard de luminance, à chaque fois que l'image la plus récente est capturée, les données de luminance capturées dans une nouvelle image sont ajoutées aux données de luminance déjà obtenues pour obtenir à nouveau la valeur standard de luminance.
